# EUROPÄISCHE PATENTSCHRIFT

(11) **EP 0 694 984 B1**
(45) Veröffentlichungstag und Bekanntmachung des Hinweises auf die Patenterteilung: **14.11.2001**
(21) Anmeldenummer: 95110731.7
(22) Anmeldetag: 10.07.1995
(51) Int. Cl.: H01Q 1/24, H01Q 21/29, H04B 7/08

(54) **Antennenanordnung mit einer unsymmetrischen Masseverteilung insbesondere für drahtlose Telekommunikationssysteme**
Antenna arrangement with an asymmetric ground distribution particularly for wireless telecommunications systems
Agencement d'antenne avec une distribution asymétrique de masse notamment pour systèmes de télécommunications sans fil

(30) Priorität: 25.07.1994 DE 4426252
(43) Veröffentlichungstag der Anmeldung: 31.01.1996
(73) Patentinhaber: SIEMENS AKTIENGESELLSCHAFT, 80333 München (DE)
(72) Erfinder: Gapski, Dietmar, Dipl. Ing., D-47058 Duisburg (DE); Sauer, Jürgen, Dipl. Ing., D-46117 Oberhausen (DE); Detering, Volker, Dipl. Ing., D-46446 Emmerich (DE); Lepping, Jürgen, Dipl. Ing., D-45359 Essen (DE)

(56) Entgegenhaltungen:
- EP-A- 0 070 150
- WO-A-94/29926
- DE-A- 4 339 162
- FR-A- 2 699 743
- US-A- 5 177 493
- PATENT ABSTRACTS OF JAPAN vol. 9 no. 197 (E-335) ,14.August 1985 & JP-A-60 064505 (MATSUSHITA DENKI SANGYO) 13.April 1985,
- IEICE TRANSACTIONS, Bd. e74, Nr. 10, Oktober 1991 TOKYO JP, Seiten 3202-3209, XP 000279303 YAMADA ET AL. 'Diversity Antennas for Base and Mobile Stations in Land Mobile Communication Systems'

## Beschreibung

Die Erfindung betrifft eine Antennenanordnung mit einer unsymmetrischen Masseverteilung, insbesondere für drahtlose Telekommunikationssysteme gemäß dem Oberbegriff des Patentanspruches 1.

Drahtlose Telekommunikationssysteme mit Funksende-/Funkempfangseinrichtungen, wie beispielsweise Schnurlostelefone nach dem DECT-Standard (Digital European Cordless Telecommunication; vgl. **(1)** European Telecommunication Standard; prETS 300 175-1...9, 10/1992, Teil 1 bis 9, ETS-Institute 06921 Sofia Antipoles, France; **(2)** Nachrichtentechnik Elektronik 42 (Jan./Feb. 1992), No.1, Berlin; U. Pilger: "Struktur des DECT-Standards"; Seiten 23 bis 29; **(3)** Philips Telecommunication Review: "DECT, Universal Cordless Access System"; Vol. 49, Nr. 3, 09/1991, Seiten 68 bis 73) bzw. (CT1+)-Standard, bestehend aus einer Schnurlos-Basisstation und mindestens einem Schnurlos-Mobilteil, oder mobile Handapparate von Mobilfunksystemen nach dem GSM-Standard (Groupe Speciale Mobile oder Global Systems for Mobile Communication; vgl. Informatik Spektrum, Springer Verlag Berlin, Jg. 14, 1991, No. 3, Seiten 137 bis 152, "Der GSM-Standard - Grundlage für digitale europäische Mobilfunknetze"), verwenden systemspezifische Antennenanordnungen. So unterscheiden sich die Antennenanordnungen z. B. hinsichtlich der
(1) Abmaße,
(2) Strahlungscharakteristik und
(3) Anzahl pro Funksende-/Funkempfangseinrichtung verwendeter Antennen.

Die Abmaße der Antennenanordnung hängen dabei im wesentlichen davon ab, welche Trägerfrequenz für die Nachrichtenübertragung und welcher Antennentyp in dem drahtlosen Telekommunikationssystem verwendet wird. So hat eine λ/4-Antenne bei einer Trägerfrequenz von 800-900 MHz ((CT1+)- bzw. GSM-Standard) größere Abmaße als die gleiche Antenne bei einer Trägerfrequenz von 1880-1900 MHz (DECT-Standard).

In bezug auf die Strahlungscharakteristik sollen die Antennenanordnungen eine möglichst ideale Rundstrahlcharakteristik aufweisen, damit die Sendeleistung der Funksende-/Funkempfangseinrichtung in dem drahtlosen Telekommunikationssystem in alle Richtungen gleichmäßig abgestrahlt wird. Darüber hinaus ist bei einer Antennenanordnung mit einer Rundstrahlcharakteristik gewährleistet, daß die entsprechende Funksende/Funkempfangseinrichtung zum einen universell in jeder Umgebung einsetzbar ist und zum anderen in jeder Richtung die gleiche Übertragungsreichweite erzielt werden kann. Die Übertragungsreichweite in dem drahtlosen Telekommunikationssystem hängt dabei im wesentlichen von der Sendeleistung und der Empfängerempfindlichkeit ab.

Bezüglich der Anzahl der Antennen gibt es gemäß der WO 94/10764 Antenna Diversity-Funksendeeinrichtungen/Antenna Diversity-Funkempfangseinrichtungen, die mindestens zwei Antennen aufweisen.

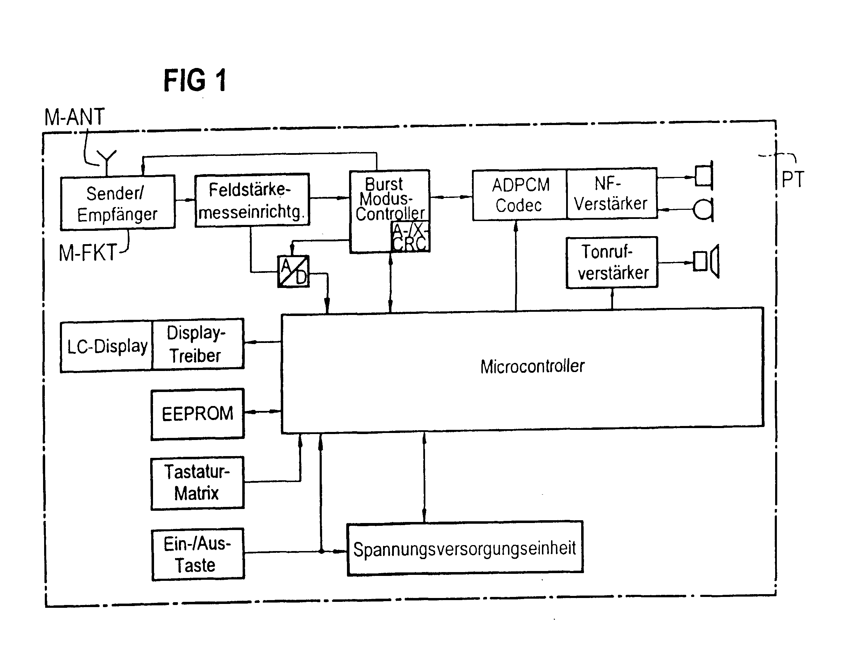

Figur 1 zeigt den prinzipiellen Aufbau eines DECT-spezifischen Schnurlos-Mobilteils PT (Portable Termination) mit einer mobilteilspezifischen Antenne M-ANT, die mit einem Funkteil M-FKT des Mobilteils PT verbunden ist. Schnurlos-Mobilteile mit einem solchen Aufbau sind unter der Produktbezeichnung "Gigaset 952" - vgl. DE-Z: Funkschau 12/1993, Seiten 24 und 25; "Digitale Freiheit - Gigaset 952: Das erste DECT-Telefon"; Autor: G. Weckwert - 1993 auf dem Markt eingeführt worden. Der Aufbau des Schnurlos-Mobilteils ist ferner auch aus der DE-Z: Funkschau 10/1993; Seiten 74 bis 77; Titel: "Digital kommunizieren mit DECT - DECT-Chipsatz von Philips"; Autor: Dr. J. Nieder und der WO 94/10812 (Figur 1 mit der dazugehörigen Beschreibung) bekannt.

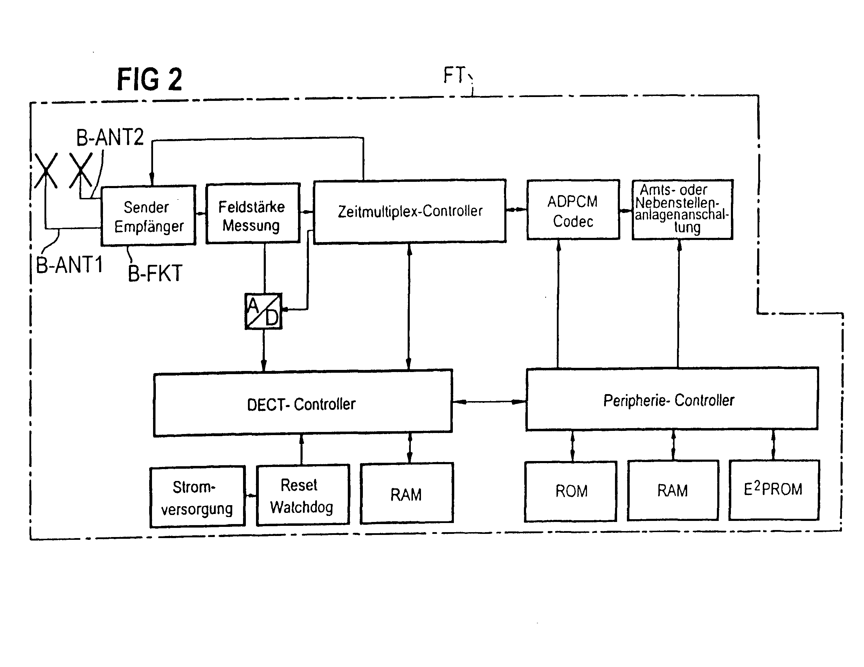

Figur 2 zeigt den prinzipiellen Aufbau einer DECT-spezifischen als Antenna Diversity-Funksendeeinrichtung/Antenna Diversity-Funkempfangseinrichtung ausgebildeten Schnurlos-Basisstation FT (Fixed Termination) mit zwei basisstationsspezifischen Diversity-Antennen B-ANT1, B-ANT2, die mit einem Funkteil B-FKT der Basisstation FT verbunden ist. Schnurlos-Basisstationen mit einem solchen Aufbau sind unter der Produktbezeichnung "Gigaset 952" - vgl. DE-Z: Funkschau 12/1993, Seiten 24 und 25; "Digitale Freiheit - Gigaset 952: Das erste DECT-Telefon"; Autor: G. Weckwert - 1993 auf dem Markt eingeführt worden. Der Aufbau der Schnurlos-Basisstation ist ferner auch aus der DE-Z: Funkschau 10/1993; Seiten 74 bis 77; Titel: "Digital kommunizieren mit DECT - DECT-Chipsatz von Philips"; Autor: Dr. J. Nieder und der WO 94/10812 (Figur 1 mit der dazugehörigen Beschreibung) bekannt.

Aus der Druckschrift Electronics and Communications in Japan, Part 1, Vol. 76, No. 10, 1993; K.Tsunekawa, K. Kagoshima "Diversity Performance Analysis of Two Parallel Dipole Antennas Mounted on a Small Metal Body", Seiten 80 bis 90 ist eine Antennenkonfiguration bekannt, die als Diversity-Antennenkonfiguration betrieben wird und die aus zwei auf einen metallischen Körper angeordnete λ/2-Dipolantennen besteht.

Aus der AT- E 52 149 B (Übersetzung der EP- 0 070 150 B1) ist eine Antennenanordnung für Sprechfunkgeräte bekannt, bei der eine mit einem HF-Signal speisbare Hauptantenne gegenüber einem Gehäuse (Masse-Klemme) angeordnet ist und bei der außerdem eine in einem entgegengesetzten Bereich und in einem Winkel zwischen 90° und 180° zur Hauptantenne angeordnete, als Gegenelektrode zu dieser dienende Hilfsantenne mit dem Gehäuse bzw. der Masse-Klemme verbunden ist. Mit dieser Antennenanordnung kann die Stromverteilung des ganzen Abstrahlsystems derart verändert werden, daß im Bereich des Gehäuses ein Potentialminimum auftritt. Durch eine derartig ausgebildete Antennenanordnung werden insbesondere die durch die Nachbarschaft des menschlichen Körpers hervorgerufene Beeinflussung des elektromagnetischen Feldes reduziert und der Wirkungsgrad der Antennenanordnung erhöht.

Aus der US-5,177,493 ist eine Antennenanordnung mit einer unsymmetrischen Masseverteilung bekannt, bei der eine erste Antenne und eine zweite Antenne einzeln speisbar und asymmetrisch, dezentrisch auf einer leitenden Fläche angeordnet sind. Die beiden Antennen sind im wesentlichen rechtwinklig zueinander auf der leitenden Fläche angeordnet. Die zweite Antenne liegt im wesentlichen parallel zu der Ebene der leitenden Fläche und mindestens eine der beiden Antennen ist in bezug auf die Antennenanpassung phasen- und betragsmäßig optimiert.

Antennenanordnungen mit einer asymmetrischen Masseverteilung, sind solche Antennenanordnungen, bei denen z. B. eine λ/4-Antenne auf der Ecke eines metallischen Körpers angeordnet wird. Derartige Antennenanordnungen weisen häufig eine unbefriedigende Rundstrahlcharakteristik auf.

Die der Erfindung zugrundeliegende Aufgabe besteht darin, eine Antennenanordnung mit einer unsymmetrischen Masseverteilung, insbesondere für drahtlose Telekommunikationssysteme anzugeben, die eine möglichst gute Rundstrahlcharakteristik aufweist, universell einsetzbar und auf einfache Weise kostengünstig herstellbar ist.

Diese Aufgabe wird ausgehend von der in dem Oberbegriff des Patentanspruches 1 definierten Antennenanordnung mit einer unsymmetrischen Masseverteilung durch die in dem kennzeichnenden Teil des Patentanspruches 1 angegebenen Merkmale gelöst.

Um für Antennenanordnungen, bei der zwei unabhängig voneinander speisbare Antennen, eine erste Antenne und eine zweite Antenne gegenüber einer leitenden Fläche asymmetrisch, dezentrisch angeordnet sind, (asymmetrischen Masseverteilung der Antennenanordnung) und bei der mindestens eine der beiden Antennen in bezug auf die Antennenanpassung phasen- und betragsmäßig angepaßt ist, eine möglichst gute Rundstrahlcharakteristik zu erzielen, sind die Antennen etwa rechtwinklig zueinander auf der leitenden Fläche angeordnet. Darüber hinaus ist eine der beiden Antennen im wesentlichen parallel zu der Ebene der leitenden Fläche (im wesentlichen in der Ebene der leitenden Fläche) angeordnet. Außerdem ist die zweite Antenne derart zu der Ebene der leitenden Fläche angeordnet ist, daß sie von der leitenden Fläche weg zeigt.

Vorteilhafte Weiterbildungen der Erfindung sind in den Unteransprüchen angegeben.

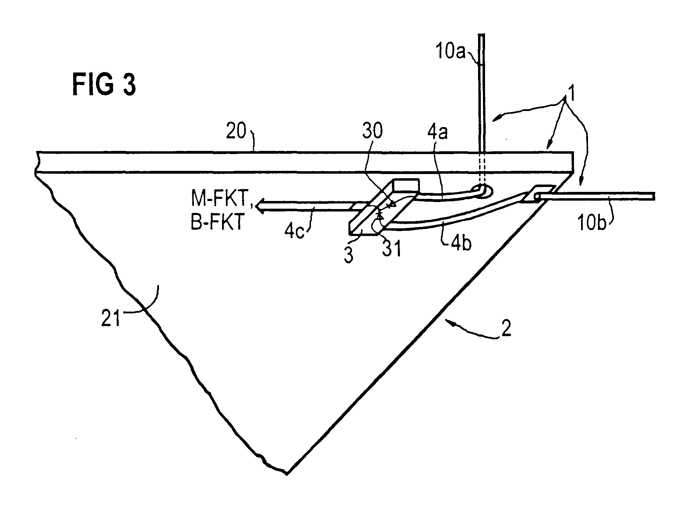

Ein Ausführungsbeispiel der Erfindung wird anhand der Figur 3 erläutert.

Figur 3 zeigt eine Antennenanordnung 1 mit zwei λ/4-Antennen, einer ersten Antenne 10a und einer zweiten Antenne 10b, die in der Ecke einer Leiterplatte 2 angeordnet sind. Dadurch ergibt sich ein asymmetrisches Gegengewicht für die Antennen 10a, 10b (asymmetrischen Masseverteilung der Antennenanordnung). Senkrecht zu einer ersten kupferbeschichteten Leiterplattenfläche 20 (leitende Fläche) der Leiterplatte 2 ist die erste Antenne 10a angeordnet, die die Leiterplatte 2 durchgreift und dabei keine elektrische Verbindung zu der Leiterplattenfläche 20 aufweist. Am Fußpunkt der Antenne 10a ist auf einer der ersten kupferbeschichteten Leiterplattenfläche 20 gegenüberliegenden zweiten Leiterplattenfläche 21 eine erste Streifenleitung 4a vorgesehen, die die erste Antenne 10a mit einem Diodenschalter 3 verbindet. Der Diodenschalter 3 ist wie die Streifenleitung 4a auf der zweiten Leiterplattenfläche 21 angeordnet. Auf der zweiten Leiterplattenfläche 21 sind außerdem die mobilteil- oder basisstationsspezifischen Schaltungsblöcke nach Figur 1 bzw. 2, wie z. B. das Funkteil M-FKT oder B-FKT, angeordnet (in Figur 3 nicht dargestellt).

Darüber hinaus ist auf der zweiten Leiterplattenfläche 21 rechtwinklig zu der ersten Antenne 10a, also in der Ebene der Leiterplatte 2, die zweite Antenne 10b angeordnet. Der Fußpunkt der zweiten Antenne 10b fällt dabei nicht mit dem Fußpunkt der ersten Antenne 10a zusammen. Dies ist gleichbedeutend damit, daß die beiden Antennen 10a, 10b unabhängig voneinander mit einem HF-Funksignal, wie es gemäß der Figuren 1 oder 2 in dem Funkteil M-FKT, B-FKT erzeugt wird, gespeist werden können. Vom Fußpunkt der zweiten Antenne 10b führt eine zweite Streifenleitung 4b wiederum zu dem Diodenschalter 3. Von dem Diodenschalter 3 führt eine den beiden Antennen 10a, 10b gemeinsame dritte Streifenleitung 4c zu dem Funkteil M-FKT, B-FKT nach den Figuren 1 und 2.

Der Diodenschalter 3 hat die Funktion, daß bei der Verwendung der vorstehend beschriebenen Antennenanordnung 1 in einer Antenna Diversity-Funksendeeinrichtung/Antenna Diversity-Funkempfangseinrichtung, wie z. B. die Schnurlos-Basisstation FT nach Figur 2, immer nur eine der beiden Antennen aktiv geschaltet ist und gleichzeitig die beschriebene Rundstrahlcharakteristik erzeugt wird (Doppelausnutzung der dargestellten Antennenanordnung). Für diese Schaltfunktion weist der Diodenschalter 3 eine erste Diode 30, die an der Kathode mit der dritten Streifenleitung 4c und an der Anode mit der ersten Streifenleitung 4a verbunden ist und eine zweite Diode 31 auf, die an der Kathode mit der dritten Streifenleitung 4c und an der Anode mit der zweiten Streifenleitung 4b verbunden ist. Beide Dioden 30, 31 werden beispielsweise von dem Mikrocontroller nach Figur 2 bezüglich der Schaltfunktion gesteuert.

Wird die Antennenanordnung 1 jedoch in dem Schnurlos-Mobilteil PT nach Figur 1, das nicht als Antenna Diversity-Funksendeeinrichtung/Antenna Diversity-Funkempfangseinrichtung ausgebildet ist, eingesetzt, so wird eine der beiden Antennen 10a, 10b nicht mit einem HF-Signal gespeist, also im Unterschied zu den Verhältnissen bei der Schnurlos-Basisstation FT ausschließlich für die Erzeugung der Rundstrahlcharakteristik genutzt. Der Diodenschalter 3 ist in diesem Fall nicht erforderlich.

Die beiden Antennen 10a, 10b der Antennenanordnung 1 sind weiterhin derart auf der Leiterplatte 2 angeordnet, daß mindestens eine der beiden Antennen in bezug auf die Antennenanpassung phasen- und betragsmäßig optimiert ist. Die Antennenanpassung wird dabei über die entsprechende Streifenleitung 4a, 4b vorgenommen.

## Patentansprüche

1. Antennenanordnung mit einer unsymmetrischen Masseverteilung, insbesondere für drahtlose Telekommunikationssysteme, mit einer ersten Antenne (10a) und einer zweiten Antenne (10b), die einzeln speisbar und asymmetrisch, dezentrisch auf einer leitenden Fläche (20) angeordnet sind, wobei mindestens eine der beiden Antennen phasen- und betragsmäßig angepaßt ist, die Antennen (10a, 10b) im wesentlichen rechtwinklig zueinander auf der leitenden Fläche (20) angeordnet sind und die zweite Antenne (10b) im wesentlichen parallel zu der Ebene der leitenden Fläche (20) liegt,
**dadurch gekennzeichnet, daß**
die zweite Antenne (10b) derart zu der Ebene der leitenden Fläche (20) angeordnet ist, daß sie von der leitenden Fläche (20) weg zeigt.

2. Antennenanordnung nach Anspruch 1, **dadurch gekennzeichnet, daß** die Antennenanpassung über ein Leitungsstück (4a, 4b) auf einer weiteren leitenden Fläche (21) erfolgt.

3. Antennenanordnung nach Anspruch 1 oder 2, **dadurch gekennzeichnet, daß** die leitende Fläche (20) als kupferbeschichtete Leiterplattenfläche einer mit elektronischen Schaltungen (B-FKT, M-FKT) bestückten Leiterplatte (2) für drahtlose Funksende-/Funkempfangseinrichtungen (FT, PT) ausgebildet ist.

4. Verwendung der Antennenanordnung nach einem der Ansprüche 1 bis 3 als Diversity-Anordnung.

5. Verwendung der Antennenanordnung nach einem der Ansprüche 1 bis 4 in einem Schnurlos-Telekommunikationssystem.

## Claims

1. Antenna arrangement having an unsymmetrical mass distribution, in particular for wireless telecommunication systems, having a first antenna (10a) and a second antenna (10b) which are individually feedable and are arranged asymmetrically, locally on a conductive surface (20), where at least one of the two antennas is matched in terms of phase and magnitude, the antennas (10a, 10b) are arranged essentially at right angles to one another on the conductive surface (20), and the second antenna (10b) is situated essentially parallel to the plane of the conductive surface (20),
**characterized in that**
the arrangement of the second antenna (10b) with respect to the plane of the conductive surface (20) is such that said second antenna points away from the conductive surface (20).

2. Antenna arrangement according to Claim 1, **characterized in that** the antenna matching is effected using a line piece (4a, 4b) on another conductive surface (21).

3. Antenna arrangement according to Claim 1 or 2, **characterized in that** the conductive surface (20) is in the form of a copper-coated printed circuit board surface on a printed circuit board (2) for wireless radio transmission/radio reception devices (FT, PT) which has electronic circuits (B-FKT, M-FKT) mounted on it.

4. Use of the antenna arrangement according to one of Claims 1 to 3 as a diversity arrangement.

5. Use of the antenna arrangement according to one of Claims 1 to 4 in a cordless telecommunication system.

## Revendications

1. Agencement d'antennes ayant une répartition dissymétrique de masse, notamment pour des systèmes de télécommunications sans fil, comprenant une première antenne (10a) et une deuxième antenne (10b), qui peuvent être alimentées individuellement et qui sont disposées de manière dissymétrique, décentrées sur une surface (20) conductrice, l'une au moins des deux antennes étant adaptée en phases et en module, les antennes (10a, 10b) étant disposées sensiblement à angle droit l'une par rapport à l'autre sur la surface (20) conductrice et la deuxième antenne (10b) étant sensiblement parallèle au plan de la surface (20) conductrice,
**caractérisé en ce que**
la deuxième antenne (10b) est disposée par rapport au plan de la surface (20) conductrice de façon à ce qu'elle pointe en s'éloignant de la surface (20) conductrice.

2. Agencement d'antennes suivant la revendication 1, **caractérisé en ce que** l'adaptation d'antenne s'effectue par un tronçon (4a, 4b) de ligne sur une autre surface (21) conductrice.

3. Agencement d'antennes suivant la revendication 1 ou 2, **caractérisé en ce que** la surface (20) conductrice est constituée en surface revêtue du cuivre d'une plaquette (2) à circuit imprimé munie de circuits (B-FKT, M-FKT) électroniques pour des dispositifs (FT, PT) d'émission/réception radioélectriques sans fil.

4. Utilisation de l'agencement d'antennes suivant l'une des revendications 1 à 3, comme agencement diversity.

5. Utilisation de l'agencement d'antennes suivant l'une des revendications 1 à 4 dans un système de télécommunications sans fil.
